# EUROPEAN PATENT SPECIFICATION

(11) **EP 4 631 748 B1**
(45) Date of publication and mention of the grant of the patent: **02.12.2026**
(21) Application number: 23900319.7
(22) Date of filing: 18.10.2023
(51) Int. Cl.: B60C 19/00, B60C 99/00, B60C 11/24

(54) **TIRE REMAINING-LIFE PREDICTION DEVICE, TIRE REMAINING-LIFE PREDICTION METHOD, AND PROGRAM**
VORRICHTUNG ZUR VORHERSAGE DER RESTLEBENSDAUER EINES REIFENS, VERFAHREN ZUR VORHERSAGE DER RESTLEBENSDAUER EINES REIFENS UND PROGRAMM
DISPOSITIF DE PRÉDICTION DE DURÉE DE VIE RESTANTE DE PNEU, PROCÉDÉ DE PRÉDICTION DE DURÉE DE VIE RESTANTE DE PNEU ET PROGRAMME

(30) Priority: 07.12.2022 JP 2022195825
(43) Date of publication of application: 15.10.2025
(73) Proprietor: BRIDGESTONE CORPORATION, Chuo-ku Tokyo 104-8340 (JP)
(72) Inventor: NAGAI, Toshiki, Tokyo 104-8340 (JP)
(74) Representative: Marks & Clerk LLP
(86) International application number: PCT/JP2023/037724
(87) International publication number: WO 2024/122197

(56) References cited:
- WO-A1-2017/212756
- WO-A1-2017/212915
- WO-A1-2021/201256
- WO-A1-2022/215316
- CN-A- 110 816 538
- JP-A- 2014 046 879
- JP-A- 2019 069 670
- JP-A- 2019 069 671
- JP-A- 2019 070 561
- JP-A- 2021 160 691
- US-A1- 2014 067 193
- US-A1- 2019 160 886
- US-A1- 2019 265 129
- US-A1- 2022 219 498

## Description

### TECHNICAL FIELD

The present invention relates to a tire remaining durability prediction apparatus, a tire remaining durability prediction method, and a program.

### BACKGROUND

Technologies of predicting the remaining durability of tires are conventionally known. For example, Patent Literature (PTL) 1 discloses a tire casing life prediction system that predicts the remaining life of a tire casing using the tire state or vehicle running state.

US 2019/265129 A1 relates to a tire management device enabling tire management for equalizing the use period of tires mounted on a vehicle, and is provided with a deterioration state prediction unit which, for each mounting position, predicts the deterioration tendency and the deterioration state of the tires mounted on the vehicle; a usable period prediction unit which, for each tire mounting position, predicts the usable period of the tire on the basis of the deterioration tendency and deterioration state predicted by the deterioration state prediction unit; and a mounting position planning unit which, setting the deterioration tendency of each tire predicted by the deterioration state prediction unit as a mounting position deterioration characteristic of each mounting position of a tire in the vehicle, creates, on the basis of said mounting position deterioration characteristics and the usable periods of the tires predicted by the usable period prediction unit, a modification proposal for changing the mounting positions of the tires on the vehicle in order to equalize the use period of each tire.

### CITATION LIST

### Patent Literature

PTL 1: JP 2014-046879 A

### SUMMARY

### (Technical Problem)

Further improvement in the prediction accuracy of the remaining durability of tires is needed in recent years.

It could therefore be helpful to provide a tire remaining durability prediction apparatus, tire remaining durability prediction method, and program that can improve the prediction accuracy of the remaining durability of tires.

### (Solution to Problem)

According to a first aspect of the invention there is provided a tire remaining durability protection apparatus as defined in appended claim 1.

Preferred embodiments of the tire remaining durability protection apparatus are defined in the dependent claims.

A tire remaining durability prediction method according to the present invention is defined in claim 9. A program for causing one or more computers to execute operations, wherein the operations include the tire remaining durability prediction method according to claim 9 is defined in claim 10.

### (Advantageous Effect)

It is thus possible to provide a tire remaining durability prediction apparatus, tire remaining durability prediction method, and program that can improve the prediction accuracy of the remaining durability of tires.

### BRIEF DESCRIPTION OF THE DRAWINGS

In the accompanying drawings:
FIG. 1 is a diagram illustrating the schematic structure of a tire remaining durability prediction system according to one embodiment of the present invention;
FIG. 2 is a block diagram illustrating the structure of a server illustrated in FIG. 1;
FIG. 3 is a flowchart illustrating an example of the operation of the server illustrated in FIG. 1;
FIG. 4 is a schematic diagram illustrating an external force acting on a tire mounted on a vehicle;
FIG. 5 is a partial cross-sectional view of a typical tire in the tire width direction; and
FIG. 6 is a flowchart illustrating another example of the operation of the server illustrated in FIG. 1.

### DETAILED DESCRIPTION

A tire remaining durability prediction apparatus according to one embodiment of the present invention will be described below with reference to the drawings. In the drawings, the same or corresponding parts are given the same reference signs. In the description of this embodiment, the description of the same or corresponding parts will be omitted or simplified as appropriate.

### (Structure of tire remaining durability prediction system)

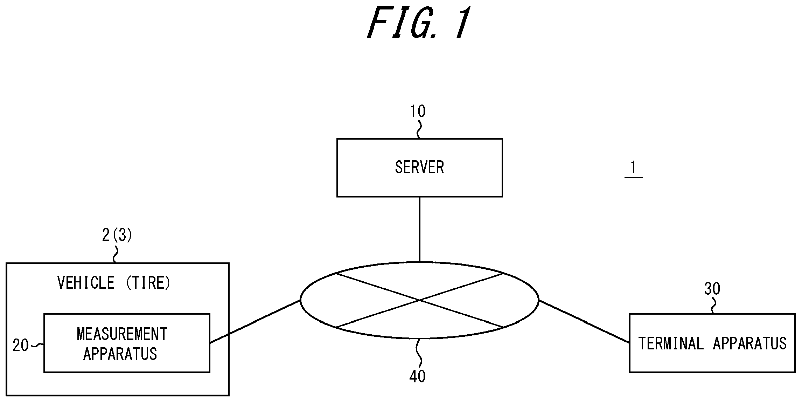

First, an overview of a tire remaining durability prediction system 1 according to this embodiment will be given with reference to FIG. 1. FIG. 1 is a diagram illustrating the schematic structure of the tire remaining durability prediction system 1. As illustrated in FIG. 1, the tire remaining durability prediction system 1 includes a server 10, a measurement apparatus 20, and a terminal apparatus 30. Although one server 10, one measurement apparatus 20, and one terminal apparatus 30 are illustrated in FIG. 1, the tire remaining durability prediction system 1 may include any number of servers 10, any number of measurement apparatuses 20, and any number of terminal apparatuses 30.

The server 10 is composed of one or more computers. In this embodiment, the server 10 is described as being composed of one computer. However, the server 10 may be composed of a plurality of computers, such as a cloud computing system. In the present invention, the server 10 is also referred to as a tire remaining durability prediction apparatus.

The measurement apparatus 20 is composed of one or more computers, such as a digital tachograph, a tire pressure monitoring system (TPMS), an electronic control unit (ECU), or a car navigation device. The measurement apparatus 20 generates at least one of running data (travel data) of a vehicle 2 on which a tire 3 is mounted or tire state data of the tire 3, and transmits it to the server 10 as time-series data. For this purpose, the measurement apparatus 20 may be installed on the vehicle 2 or the tire 3.

The running data of the vehicle 2 on which the tire 3 is mounted is, for example, time-series data of the speed, acceleration, load, running time, running distance, or running route of the vehicle 2 or the number of rotations of the tire 3. For example, the running data of the vehicle 2 may be generated by a digital tachograph. The running data of the vehicle 2 is not limited to these examples, and may include any data indicating the running state of the vehicle 2 on which the tire 3 is mounted.

The tire state data of the tire 3 is, for example, time-series data of the internal pressure (air pressure) or temperature of the tire 3. For example, the tire state data of the tire 3 may be generated by a TPMS. The tire state data of the tire 3 is not limited to these examples, and may include any data indicating the state of the tire 3.

The vehicle 2 is, for example, a truck. The vehicle 2 is not limited to a truck, and may be any vehicle on which the tire 3 can be mounted, such as a passenger vehicle, a construction vehicle, a work vehicle, a motorcycle, a bicycle, or an airplane.

The terminal apparatus 30 is, for example, a computer such as a smartphone, a tablet terminal, or a personal computer.

A network 40 is any communication network that allows the server 10, the measurement apparatus 20, and the terminal apparatus 30 to communicate with each other. The network 40 in this embodiment may be, for example, the Internet, a mobile communication network, a local area network (LAN), or a combination of these.

The tire remaining durability prediction system 1 is used to predict the remaining durability of one or more tires 3. In the tire remaining durability prediction system 1, for example, the server 10 acquires running data of the vehicle 2 on which the tire 3 is mounted from the measurement apparatus 20, and calculates external force data of the external force acting on the tire 3 (hereinafter referred to as "external force data acting on the tire 3") based on the running data. The external force data acting on the tire 3 is time-series data indicating the magnitude and direction of each force applied to the tire 3. The server 10 calculates deterioration history data for at least one part of a base tire portion of the tire 3 based on the external force data. The deterioration history data includes at least one of temperature history data, strain history data, or oxygen concentration history data. The server 10 then outputs the remaining durability of the tire 3 based on the deterioration history data for at least one part of the base tire portion of the tire 3. For example, the remaining durability of the tire 3 may be transmitted from the server 10 to the terminal apparatus 30 and displayed by the terminal apparatus 30. Thus, instead of the remaining durability of the tire 3 being predicted directly from the data acquired from the measurement apparatus 20, the remaining durability of the tire 3 is predicted in a stepwise manner by calculating the external force data acting on the tire 3 as intermediate data. This can improve the prediction accuracy of the remaining durability of the tire 3.

The durability of the tire 3 is an index representing the state of the tire 3 that changes with use of the tire 3. In the present invention, the durability of the tire 3 is represented by an index that decreases with use of the tire 3. An example of the index that decreases with use of the tire 3 is the remaining durability of the tire 3. The remaining durability of the tire 3 is an index representing the remaining period until the tire 3 in use reaches a predetermined limit state. The remaining durability is also called the remaining life. For example, the remaining durability of the tire 3 can be expressed as a numerical value from 0 to 100, with the value in the initial state of the tire 3 being 100 and the value in the limit state of the tire 3 being 0. Alternatively, the durability of the tire 3 may be represented by an index that increases with use of the tire 3. An example of the index that increases with use of the tire 3 is the fatigue degree of the tire 3. The fatigue degree of the tire 3 is an index representing the degree of fatigue accumulated in the tire 3 in use. For example, the fatigue degree of the tire 3 can be expressed as a numerical value from 0 to 100, with the value in the initial state of the tire 3 being 0 and the value in the limit state of the tire 3 being 100.

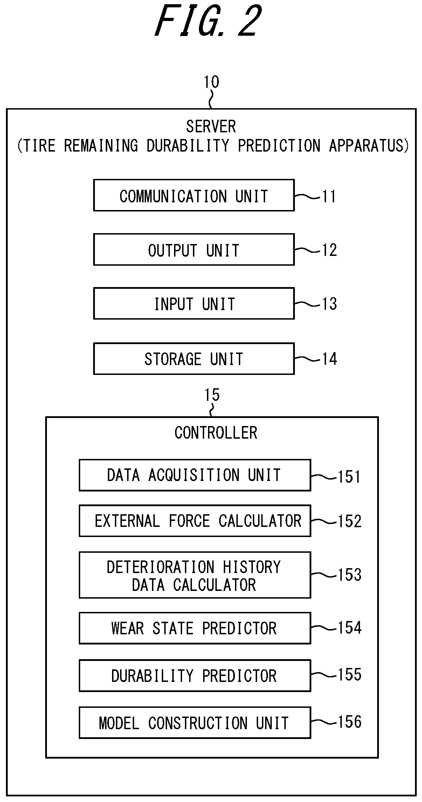

Next, the server 10, which is a tire remaining durability prediction apparatus, will be described in detail with reference to FIG. 2. FIG. 2 is a block diagram illustrating the structure of the server 10. As illustrated in FIG. 2, the server 10 includes a communication unit 11, an output unit 12, an input unit 13, a storage unit 14, and a controller 15. In the server 10, the communication unit 11, the output unit 12, the input unit 13, the storage unit 14, and the controller 15 are connected so as to be able to communicate with each other by wire or wirelessly.

The communication unit 11 includes a communication module for connecting to the network 40. The communication module is a communication module compatible with a mobile communication standard such as 4G (4th Generation) or 5G (5th Generation). The communication module may be a communication module compatible with a standard such as a wired LAN or a wireless LAN. The communication module may be a communication module compatible with a short-range wireless communication standard such as Wi-Fi^{®} (Wi-Fi is a registered trademark in Japan, other countries, or both), Bluetooth^{®} (Bluetooth is a registered trademark in Japan, other countries, or both), or infrared communication. In this embodiment, the server 10 is connected to the network 40 via the communication unit 11. This allows the server 10 to communicate with the measurement apparatus 20, the terminal apparatus 30, other computers, etc.

The output unit 12 includes one or more output devices. Examples of the output devices included in the output unit 12 include a display, a speaker, and a lamp. This allows the output unit 12 to output images, sounds, light, etc.

The input unit 13 includes one or more input devices. Examples of the input devices included in the input unit 13 include a touch panel, a camera, and a microphone. The input unit 13 receives, for example, input operations by a user of the server 10.

The storage unit 14 is, for example, a semiconductor memory, a magnetic memory, or an optical memory. The storage unit 14 functions, for example, as a main storage, an auxiliary storage, or a cache memory. The storage unit 14 stores any information used in the operation of the server 10. For example, the storage unit 14 stores a system program, an application program, embedded software, a database, etc. The information stored in the storage unit 14 may be updated, for example, with information acquired from the network 40 via the communication unit 11.

For example, the storage unit 14 may store tire identification information of each of one or more tires 3 to be measured by the measurement apparatus 20. The tire identification information of the tire 3 is information that can uniquely identify the tire 3. The tire identification information is, for example, an identifier (ID) of the tire 3 uniquely assigned by the server 10. The tire identification information is not limited to such, and may be, for example, the production number of the tire 3. The storage unit 14 may store information about the tire 3 in association with the tire identification information of the tire 3.

The controller 15 includes one or more processors. Examples of the processors include a general-purpose processor such as a central processing unit (CPU) and a dedicated processor specialized for specific processing. The controller 15 is not limited to one or more processors, and may include one or more dedicated circuits. Examples of the dedicated circuits include a field-programmable gate array (FPGA) and an application specific integrated circuit (ASIC). The controller 15 controls each of the foregoing components such as the communication unit 11, output unit 12, input unit 13, and storage unit 14 in order to achieve the functions of the server 10 including the functions of these components. In the present invention, the controller 15 controls the foregoing components in the server 10 and thus can operate as a data acquisition unit 151, an external force calculator 152, a deterioration history data calculator 153, a wear state predictor 154, a durability predictor 155, and a model construction unit 156 (described in detail later).

### (Operation of tire remaining durability prediction apparatus)

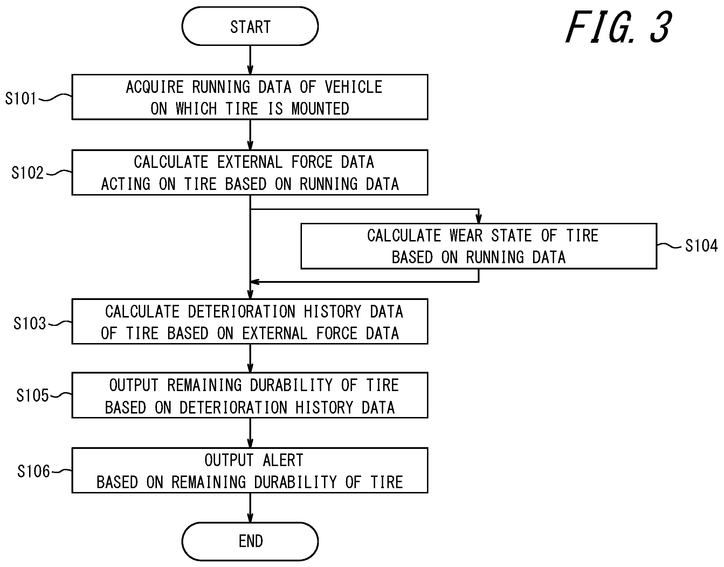

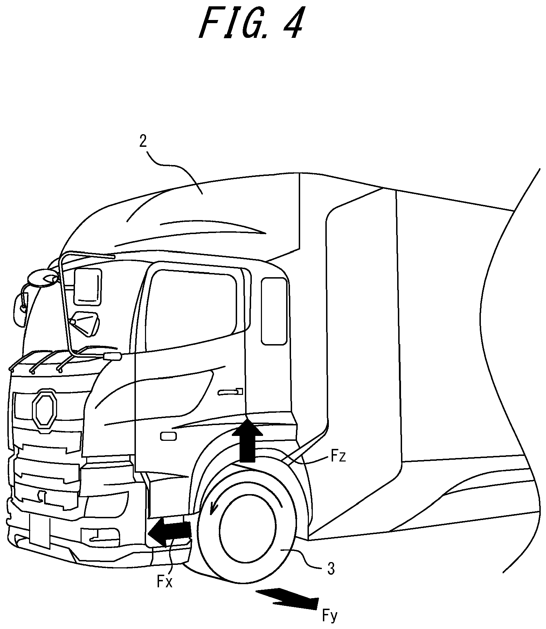

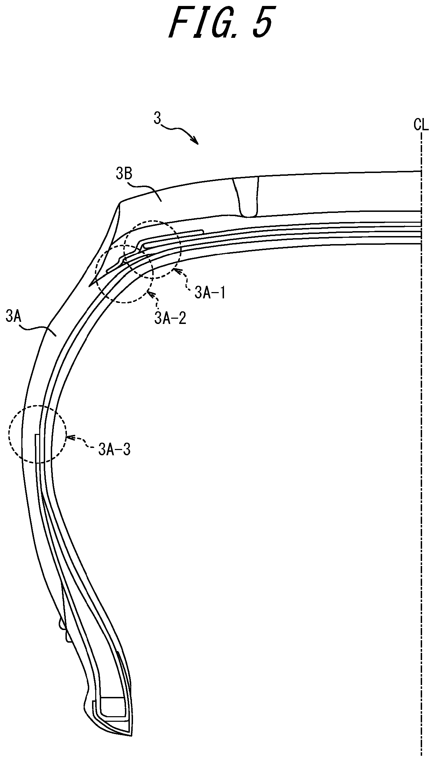

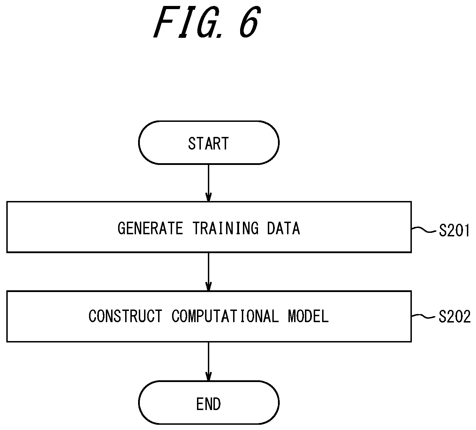

The operation of the server 10, which is a tire remaining durability prediction apparatus, will be described with reference to FIGS. 3, 4, 5, and 6. FIG. 3 is a flowchart illustrating an example of the operation of the server 10. FIG. 4 is a schematic diagram illustrating an external force acting on the tire 3 mounted on the vehicle 2. FIG. 5 is a partial cross-sectional view of a typical tire 3 in the tire width direction. FIG. 6 is a flowchart illustrating another example of the operation of the server 10. The operation of the server 10 is illustrated in the flowcharts in FIGS. 3 and 6. The described operation corresponds to a tire remaining durability prediction method executed by the server 10.

First, the operation of predicting the remaining durability of the tire 3 by the server 10 will be described with reference to FIG. 3.

In the description of the operation, it is assumed that the storage unit 14 in the server 10 stores the tire identification information of the tire 3 and information about the tire 3 associated with the tire identification information of the tire 3. The information about the tire 3 includes, for example, at least one of structure information of the tire 3, structure information of the vehicle 2 on which the tire 3 is mounted, or position information of the position of the tire 3 mounted on the vehicle 2. The structure information of the tire 3 is, for example, the type, model number, material property, belt angle, size, weight, etc. of the tire 3. The structure information of the tire 3 may also include production data specific to the tire 3, such as the length of the folded-up portion of the carcass (ply) or the belt width, measured by an X-ray inspection machine at the time of shipment of the tire 3 from the factory, for example. Even for tires 3 with the same model number, production data may differ due to production variation between the tires 3. Taking this into consideration can further improve the prediction accuracy of the remaining durability of the tire 3. The structure information of the vehicle 2 on which the tire 3 is mounted includes the type, model number, displacement, number of tires mounted, number of shafts, etc. of the vehicle 2.

In step S101, the controller 15 in the server 10 as the data acquisition unit 151 acquires running data of the vehicle 2 on which the tire 3 is mounted as time-series data.

For example, the controller 15 in the server 10 acquires the running data of the vehicle 2 on which the tire 3 is mounted from the measurement apparatus 20 via the communication unit 11. The controller 15 may store the acquired running data in the storage unit 14 in association with the tire identification information of the tire 3.

In step S101, the controller 15 in the server 10 as the data acquisition unit 151 may acquire data other than the running data of the vehicle 2.

As one example, the controller 15 in the server 10 may acquire tire state data of the tire 3 as time-series data from the measurement apparatus 20 via the communication unit 11. As another example, the controller 15 may acquire outdoor temperature data from the measurement apparatus 20 or a weather information service via the communication unit 11. The outdoor temperature data is, for example, data of the air temperature, humidity, or precipitation at the location where the vehicle 2 on which the tire 3 is mounted is located. Alternatively, the controller 15 may acquire the wear state of the tire 3 from the terminal apparatus 30 via the communication unit 11. The wear state of the tire 3 is an index representing the degree of wear of the tire 3 due to use of the tire 3. The wear state of the tire 3 is, for example, the remaining groove depth of the tread of the tire 3. The controller 15 may store the acquired data in the storage unit 14 in association with the tire identification information of the tire 3.

In step S102, the controller 15 in the server 10 as the external force calculator 152 calculates external force data acting on the tire 3 based on the running data of the vehicle 2 on which the tire 3 is mounted.

The external force data acting on the tire 3 is time-series data representing the force applied to the tire 3. The external force data may be composed of one or more external force components. In this operation example, the external force data is composed of an external force component Fx in the traveling direction of the vehicle 2, an external force component Fy in the rotation axis direction of the tire 3, and an external force component Fz in the vertical direction in a state in which the tire 3 is mounted on the vehicle 2, as illustrated in FIG. 4. Thus, the external force data on the tire 3 can represent the magnitude and direction of each force applied to the tire 3. The number of components constituting the external force data on the tire 3 is not limited to three.

Any method can be used to calculate the external force data acting on the tire 3. The controller 15 in the server 10 may store an association algorithm between the running data of the vehicle 2 on which the tire 3 is mounted and the external force data acting on the tire 3, in the storage unit 14 in advance. The controller 15 can use the association algorithm to calculate the external force data acting on the tire 3 based on the running data of the vehicle 2 on which the tire 3 is mounted.

In this embodiment, the association algorithm used to calculate the external force data acting on the tire 3 is constructed by a statistical method such as machine learning or deep learning. In this operation example, the association algorithm includes one or more computational models constructed by machine learning (described in detail later). In the case where there are a plurality of computational models, an appropriate computational model may be used depending on the target tire 3. The computational model acquires the running data of the vehicle 2 on which the tire 3 is mounted and outputs the external force data acting on the tire 3. Thus, the server 10 can further improve the calculation accuracy of the external force data acting on the tire 3 by machine learning. The association algorithm may include a predetermined relational formula that is not based on a statistical method. The controller 15 may store the calculated external force data acting on the tire 3 in the storage unit 14 in association with the tire identification information of the tire 3.

Referring again to FIG. 3, when calculating the external force data acting on the tire 3 in step S102, the controller 15 in the server 10 may use other information in addition to the running data of the vehicle 2 on which the tire 3 is mounted. For example, the controller 15 in the server 10 may calculate the external force data using tire state data of the tire 3 in addition to the running data of the vehicle 2 on which the tire 3 is mounted. For example, it is preferable that the controller 15 in the server 10 calculates the external force data based on the running data of the vehicle 2 on which the tire 3 is mounted and information about the tire 3. The information about the tire 3 includes at least one of structure information of the tire 3, structure information of the vehicle 2 on which the tire 3 is mounted, or position information of the position of the tire 3 mounted on the vehicle 2, as mentioned above. Even with the same running data, the external force data acting on the tire 3 may differ depending on the structure of the tire 3, the structure of the vehicle 2 on which the tire 3 is mounted, the position at which the tire 3 is mounted on the vehicle 2, etc. Hence, the use of the information about the tire 3 can further improve the calculation accuracy of the external force data.

As one example, the controller 15 in the server 10 as the external force calculator 152 may calculate the external force data acting on the tire 3 based on the running data of the vehicle 2 on which the tire 3 is mounted, the tire state data of the tire 3, and outdoor temperature data. In this case, the foregoing association algorithm used to calculate the external force data may be configured to receive, as input, the tire state data of the tire 3 and the outdoor temperature data in addition to the running data of the vehicle 2 on which the tire 3 is mounted. The tire state data of the tire 3 may be, for example, time-series data of the internal pressure (air pressure) or temperature of the tire 3 generated by a TPMS, as mentioned above.

Specifically, the controller 15 in the server 10 may calculate the external force component Fz of the external force data using time-series data of the internal pressure and/or temperature of the tire 3, outdoor temperature data, and time-series data of the speed of the vehicle 2. The controller 15 may further calculate the external force components Fx and Fy of the external force data using the calculated external force component Fz and time-series data of the speed and/or acceleration of the vehicle 2. The controller 15 may store the calculated external force components Fx, Fy, and Fz as the external force data acting on the tire 3 in the storage unit 14 in association with the tire identification information of the tire 3.

In step S103, the controller 15 in the server 10 as the deterioration history data calculator 153 calculates deterioration history data for at least one part of the base tire portion of the tire 3 based on the external force data acting on the tire 3.

The deterioration history data is time-series data of an index related to deterioration of the tire 3. The deterioration history data may include at least one of temperature history data, strain history data, or oxygen concentration history data. The temperature history data is time-series data of temperature in at least one part of the base tire portion 3A of the tire 3. The strain history data is time-series data of strain occurring in at least one part of the base tire portion 3A of the tire 3. The oxygen concentration history data is time-series data of the concentration of oxygen contained in the rubber forming at least one part of the base tire portion 3A of the tire 3. The deterioration history data preferably includes at least two selected from the temperature history data, the strain history data, and the oxygen concentration history data, and more preferably includes all of the temperature history data, the strain history data, and the oxygen concentration history data.

As illustrated in FIG. 5, the base tire portion 3A of the tire 3 may be a part other than the tread rubber 3B of the tire 3. The base tire portion 3A of the tire 3 includes a belt, a carcass, bead cores, side rubbers, etc. The base tire portion 3A of the tire 3 is a part that can continue to be used without being removed when the tire 3 is retreaded. By calculating the deterioration history data for at least one part of the base tire portion 3A of the tire 3, it is possible to, even if the tire 3 is retreaded, continue to use the tire remaining durability calculated by this operation as an evaluation index of the durability of the tire 3.

The at least one part of the base tire portion 3A of the tire 3 includes an inter-belt part (i.e. a part between belts) 3A-1, a belt-ply part (i.e. a part between a belt and a ply) 3A-2, and a ply end 3A-3. In FIG. 5, the schematic positions of the inter-belt part 3A-1, the belt-ply part 3A-2, and the ply end 3A-3 are designated by dashed circles. The inter-belt part 3A-1, the belt-ply part 3A-2, and the ply end 3A-3 are, however, not limited to the ranges of the dashed circles in FIG. 5.

The inter-belt part 3A-1 is a location between the belt layers or belt reinforcing layers that form the belt. The belt-ply part 3A-2 is a location between the belt and the carcass. The ply end 3A-3 is an end of the folded-up portion of the carcass and its vicinity. In these locations, cracks may occur between the rubber and the cords such as the steel cords that form the belt or carcass along the cords as the tire 3 is used. Such cracks are likely to cause a decrease in the durability of the tire 3. Calculating the deterioration history data for such a part that may cause a decrease in the durability of the tire 3 helps to evaluate the durability of the tire 3 in the subsequent processing. The at least one part of the base tire portion 3A of the tire 3 is not limited to these examples, and may include any part of the tire 3.

Any method can be used to calculate the deterioration history data. The controller 15 in the server 10 may store an association algorithm between the external force data acting on the tire 3 and the deterioration history data for at least one part of the base tire portion 3A of the tire 3, in the storage unit 14 in advance. The controller 15 can use the association algorithm to calculate the deterioration history data for at least one part of the base tire portion 3A of the tire 3 based on the external force data acting on the tire 3.

The association algorithm used to calculate the deterioration history data is constructed by machine learning. The association algorithm includes one or more computational models constructed by machine learning (described in detail later). In the case where there are a plurality of computational models, an appropriate computational model may be used depending on the target tire 3 and part of the base tire portion 3A of the tire 3. According to the invention, the computational model acquires the external force data acting on the tire 3 and outputs the deterioration history data. Thus, the server 10 can further improve the calculation accuracy of the deterioration history data of the tire 3 by machine learning. The association algorithm may include a predetermined relational formula that is not based on a statistical method. The controller 15 may store the calculated deterioration history data of the tire 3 in the storage unit 14 in association with the tire identification information of the tire 3.

The computational model may be composed of a plurality of computational models, each for outputting the temperature history data, the strain history data, or the oxygen concentration history data. The plurality of computational models may be constructed using different machine learning methods depending on the degradation history data to be output. The computational model for outputting the temperature history data is a recursive computational model that uses past output as input in addition to the external force data acting on the tire 3. The recursive computational model is, for example, a recurrent neural network or a long short term memory (LSTM). Since the temperature history data is time-series data that is highly related to previous and subsequent data, the use of past output as input can improve the calculation accuracy of the temperature history data. The computational model for calculating the strain history data, for example, acquires the external force data acting on the tire 3 and outputs data about the principal strain of the tire 3 as the strain history data. This can improve the calculation accuracy of the strain history data which periodically changes in strength as the tire 3 rotates during running of the vehicle 2. Alternatively, the respective computational models for outputting the temperature history data, the strain history data, and the oxygen concentration history data may be constructed using the same machine learning method.

Referring again to FIG. 3, when calculating the deterioration history data in step S103, the controller 15 in the server 10 may acquire other data as input in addition to the external force data acting on the tire 3 calculated in step S102.

As one example, the controller 15 in the server 10 as the deterioration history data calculator 153 may calculate the deterioration history data based on the external force data acting on the tire 3 and the tire state data of the tire 3. The tire state data of the tire 3 is, for example, time-series data of the internal pressure (air pressure) or temperature of the tire 3, as mentioned above. In this way, the internal pressure or temperature of the tire 3 can be taken into consideration, with it being possible to improve the calculation accuracy of the deterioration history data.

As another example, the controller 15 in the server 10 as the deterioration history data calculator 153 may calculate the deterioration history data based on the external force data acting on the tire 3 and the outdoor temperature data. More preferably, the controller 15 may calculate the temperature history data based on the external force data acting on the tire 3 and the outdoor temperature data. By taking the influence of the outdoor temperature into consideration, it is possible to improve the calculation accuracy of the temperature history data.

If the running data of the vehicle 2 satisfies a predetermined condition, the controller 15 in the server 10 may calculate the temperature history data based on the outdoor temperature data without using the external force data acting on the tire 3. The predetermined condition is, for example, a condition indicating that the vehicle 2 is stopped. It is known that the temperature of the tire 3 is equal to or close to the value of the outdoor temperature data while the vehicle 2 is stopped. Therefore, the temperature history data can be calculated based on the outdoor temperature data without using the external force data. Accordingly, during this period, the calculation of the external force data can be omitted without reducing the calculation accuracy of the temperature history data, so that an increase in the amount of computation in the server 10 can be suppressed.

As yet another example, the controller 15 in the server 10 as the deterioration history data calculator 153 may calculate the deterioration history data based on the external force data acting on the tire 3 and the wear state of the tire 3. The wear state of the tire 3 may be the remaining groove depth of the tread rubber 3B of the tire 3, as mentioned above. Even for tires 3 with the same model number, the external force acting on the tire 3 may differ depending on the wear state of the tread rubber 3B. By taking the wear state of the tread rubber 3B of the tire 3 into consideration, it is possible to improve the calculation accuracy of the deterioration history data for at least one part of the base tire portion 3A of the tire 3.

The wear state of the tire 3 may be prepared by any method. The controller 15 in the server 10 may acquire an actual measured value of the remaining groove depth of the tread rubber 3B of the tire 3 as the wear state of the tire 3 via the communication unit 11 or the input unit 13. Alternatively, the wear state of the tire 3 may be calculated based on external force data acting on the tire 3. In this case, in step S104, the controller 15 in the server 10 as the wear state predictor 154 may calculate the wear state of the tire 3 based on the external force data acting on the tire 3. Calculating the wear state of the tire 3 using the correlation between the external force data acting on the tire 3 and the wear state of the tire 3 makes it unnecessary to acquire the actual measured value of the wear state of the tire 3 from outside the server 10.

Any method can be used to calculate the wear state of the tire 3. Typically, the wear energy applied to the tread rubber 3B of the tire 3 can be calculated from the external force acting on the tire 3. The wear energy is expressed as the product of the amount of slippage of the tread rubber 3B against the road surface and the shear force acting on the tread rubber 3B. It is known that the wear energy and the amount of wear of the tread rubber 3B correlate with each other. Hence, the controller 15 in the server 10 may store an association algorithm between the external force data acting on the tire 3 and the wear state of the tire 3, in the storage unit 14 in advance. The controller 15 can use the association algorithm to calculate the wear state of the tire 3 based on the external force data.

In this embodiment, the association algorithm used to calculate the wear state of the tire 3 is constructed by a statistical method such as machine learning or deep learning. In this operation example, the association algorithm includes one or more computational models constructed by machine learning. In the case where there are a plurality of computational models, an appropriate computational model may be used depending on the target tire 3. The computational model acquires the external force data acting on the tire 3 and outputs the wear state of the tire 3. Thus, the server 10 can further improve the calculation accuracy of the wear state of the tire 3 by machine learning. The association algorithm may include a predetermined relational formula that is not based on a statistical method. The controller 15 may store the calculated wear state of the tire 3 in the storage unit 14 in association with the tire identification information of the tire 3.

As yet another example, in step S103, the controller 15 in the server 10 as the deterioration history data calculator 153 may use the running data of the vehicle 2 on which the tire 3 is mounted and/or the tire state data of the tire 3 in addition to or instead of the foregoing information such as the external force data acting on the tire 3. In this case, the association algorithm for calculating the deterioration history data may be configured to receive, as input, the running data of the vehicle 2 on which the tire 3 is mounted and/or the tire state data of the tire 3 in addition to or instead of the information such as the external force data acting on the tire 3. The tire state data of the tire 3 may be, for example, time-series data of the internal pressure (air pressure) or temperature of the tire 3 generated by a TPMS, as mentioned above.

Specifically, when calculating the temperature history data included in the deterioration history data, the controller 15 in the server 10 may use at least one of the time-series data of the temperature of the tire 3, the time-series data of the speed of the vehicle 2, or the position information of the tire 3 mounted on the vehicle 2. When calculating the strain history data included in the deterioration history data. the controller 15 may use at least one of the wear state of the tire 3 or the time-series data of the internal pressure of the tire 3. When calculating the oxygen concentration history data included in the deterioration history data, the controller 15 may use the temperature history data included in the deterioration history data. The controller 15 may store the calculated temperature history data, strain history data, or oxygen concentration history data as the deterioration history data in the storage unit 14 in association with the tire identification information of the tire 3.

In step S105, the controller 15 in the server 10 as the durability predictor 155 outputs the remaining durability of the tire 3 based on the deterioration history data for at least one part of the base tire portion 3A of the tire 3.

Any method can be used to calculate the remaining durability of the tire 3. The controller 15 in the server 10 may store an association algorithm between the deterioration history data for at least one part of the base tire portion 3A of the tire 3 and the remaining durability of the tire 3, in the storage unit 14 in advance. The controller 15 can use the association algorithm to calculate the remaining durability of the tire 3 based on the deterioration history data for at least one part of the tire base portion 3A of the tire 3. Specifically, the controller 15 may calculate the current remaining durability of the tire 3 (e.g. 0 to 100) by subtracting, from the remaining durability of the tire 3 in an unused state at the time of shipment from the factory as an initial value (e.g. 100), the amount of decrease in durability due to use of the tire 3 calculated from the deterioration history data of the tire 3. When calculating the remaining durability of the tire 3, the controller 15 may use information about the tire 3, such as production data specific to the tire 3, to correct the initial value of the remaining durability of the tire 3, for example. The production data specific to the tire 3 includes the length of the folded-up portion of the carcass (ply), the belt width, etc., as mentioned above. There is an optimum value for the length of the folded-up portion of the carcass or the belt width with respect to the durability index, and deviation from the optimum value may lead to a decrease in durability. For example, the remaining durability of the tire 3 may be calculated to be higher when the folded-up portion of the carcass is longer. For example, the remaining durability of the tire 3 may be calculated to be higher when the belt width is narrower. By taking the production variation between tires 3 into consideration in this way, it is possible to further improve the calculation accuracy of the remaining durability of the tire 3.

In this embodiment, the association algorithm used to calculate the remaining durability of the tire 3 is constructed by a statistical method such as machine learning or Bayesian estimation. In this operation example, the association algorithm includes one or more computational models constructed by machine learning. In the case where there are a plurality of computational models, an appropriate computational model may be used depending on the target tire 3 and part of the base tire portion 3A of the tire 3. The computational model acquires the deterioration history data for at least one part of the base tire portion 3A of the tire 3 and outputs the remaining durability of the tire 3. Thus, the server 10 can further improve the calculation accuracy of the remaining durability of the tire 3 by machine learning. The association algorithm may include a predetermined relational formula that is not based on a statistical method. The controller 15 may store the calculated remaining durability of the tire 3 in the storage unit 14 in association with the tire identification information of the tire 3.

When calculating the remaining durability of the tire 3 in step S105, the controller 15 in the server 10 may acquire the remaining durability of the tire 3 at a specific time point as input in addition to the deterioration history data calculated in step S103. Specifically, the controller 15 may output the remaining durability of the tire 3 based on the remaining durability of the tire 3 at the specific time point and the deterioration history data from the specific time point. For example, if the controller 15 has previously calculated the remaining durability of the tire 3 at the specific time point, the controller 15 may calculate the current remaining durability of the tire 3 by subtracting, from the remaining durability of the tire 3 at the specific time point as an initial value, the amount of decrease in the durability of the tire 3 calculated from the deterioration history data of the tire 3 from the specific time point. This can omit the calculation of the amount of decrease in the durability of the tire 3 from the time of shipment from the factory to the specific time point, and suppress an increase in the amount of computation in the server 10.

The controller 15 in the server 10 may output the remaining durability of the tire 3 calculated in step S105 by any method. For example, the controller 15 may display the remaining durability of the tire 3 via the output unit 12 such as a display. Alternatively, the controller 15 may transmit a request to display the remaining durability of the tire 3 to the terminal apparatus 30 via the communication unit 11. In such a case, the terminal apparatus 30 can display the remaining durability of the tire 3 via a display or the like based on the request received from the server 10. As a result, the user of the tire remaining durability prediction system 1 can view the visualized remaining durability of the tire 3. The tire remaining durability prediction system 1 can thus improve the usefulness of the technology of predicting the remaining durability of the tire 3. The controller 15 may output intermediate data in the calculation of the remaining durability of the tire 3, such as the external force data acting on the tire 3, in addition to the remaining durability. Presenting not only the remaining durability of the tire 3 but also the intermediate data in the calculation of the remaining durability to the user can improve the reliability of the remaining durability calculated using machine learning or the like.

In step S106, the controller 15 in the server 10 may output an alert if the remaining durability of the tire 3 is less than a predetermined threshold. The predetermined threshold may be, for example, a threshold indicating the acceptable range of the durability of the tire 3. Alternatively, the predetermined threshold may be associated with at least one of replacement, retreading, or rotation of the tire 3. For example, in the case where the predetermined threshold is associated with replacement of the tire 3, an alert may be output to prompt replacement of the tire 3 if the remaining durability of the tire 3 is less than the predetermined threshold.

Any method may be used to output the alert. The controller 15 in the server 10 may display information or output sound or light via the output unit 12. Alternatively, the controller 15 may transmit a request to output the alert to the terminal apparatus 30 via the communication unit 11. In such a case, the terminal apparatus 30 may output the alert via a display or the like based on the request received from the server 10. As a result, the user of the tire remaining durability prediction system 1 can be prompted to take action such as replacing, retreading, or rotating the tire 3.

Next, the operation of constructing a computational model by the server 10 will be described with reference to FIG. 6. The external force calculator 152, the deterioration history data calculator 153, the wear state predictor 154, and the durability predictor 155 may use computational models, as mentioned above. These computational models may be constructed by the model construction unit 156.

In step S201, the controller 15 in the server 10 as the model construction unit 156 generates training (teaching) data for constructing each computational model.

Any method can be used to generate the training data. For example, the controller 15 in the server 10 may generate training data in which past actual measured values corresponding to the input and output in the computational model are explanatory variables and objective variables. Thus, the accuracy of the output by the computational model can be improved by accumulating measurement data. The controller 15 in the server 10 may generate training data in which virtual time-series data generated by simulation are explanatory variables and objective variables in addition to or instead of past actual measured values. For example, it is preferable to generate virtual time-series data holding summary statistics (mean, variance, etc.) by using a known stochastic process method or mode decomposition method such as principal component analysis based on actual vehicle running data and the like. In this way, a highly accurate computational model can be constructed efficiently even in the initial stage when there is little measurement data accumulated. A vehicle running simulator, a three-dimensional tire rolling simulator, etc. may be used to generate the virtual time-series data by simulation. The three-dimensional tire rolling simulator uses a finite element method (FEM), for example.

In step S202, the controller 15 in the server 10 as the model construction unit 156 executes machine learning based on the training data to construct the computational model.

In addition to time-series data such as the running data of the vehicle 2 on which the tire 3 is mounted and the tire state data of the tire 3, any information may be used to construct the computational model in steps S201 and S202. For example, in addition to time-series data such as the running data of the vehicle 2 on which the tire 3 is mounted and the tire state data of the tire 3, information about the tire 3 such as the structure information of the tire 3, the structure information of the vehicle 2 on which the tire 3 is mounted, or the position information of the tire 3 mounted on the vehicle 2 may be used. Furthermore, for example, the outdoor temperature data, the wear state of the tire 3, or the production data specific to the tire 3 may be used. This can improve the accuracy of the output of the computational model constructed by machine learning.

As described above, in this embodiment, the server 10 as a tire remaining durability prediction apparatus comprises: the data acquisition unit 151 configured to acquire running data of the vehicle 2 on which the tire 3 is mounted; the external force calculator 152 configured to calculate external force data of an external force acting on the tire 3 based on the running data; the deterioration history data calculator 153 configured to calculate deterioration history data including at least one of temperature history data, strain history data, or oxygen concentration history data for at least one part of the base tire portion 3A of the tire 3 based on the external force data; and the durability predictor 155 configured to output remaining durability of the tire 3 based on the deterioration history data for at least one part of the base tire portion 3A.

With this structure, instead of predicting the remaining durability of the tire 3 directly from the running data of the vehicle 2 on which the tire 3 is mounted, the server 10 predicts the remaining durability of the tire 3 in a stepwise manner by calculating the external force data acting on the tire 3 as intermediate data. This can improve the prediction accuracy of the remaining durability of the tire 3.

While the presently disclosed technology has been described above by way of embodiments and drawings, various changes and modifications can be made by those of ordinary skill in the art based on the present invention. Such changes and modifications are therefore included in the scope of the present invention as defined by the appended claims.

For example, although the controller 15 in the server 10 calculates the external force data acting on the tire 3 in step S102 in the operation of predicting the remaining durability of the tire 3 described above with reference to FIG. 3, the present invention is not limited to such. For example, a computer other than the server 10 may calculate the external force data. In such a case, the controller 15 in the server 10 as the data acquisition unit 151 may acquire the external force data acting on the tire 3 in step S101 in FIG. 3. The controller 15 may then use the external force data acquired in step S101, in processing after step S101.

For example, although the above embodiment describes the case where a controller 15 in one server 10 operates as the data acquisition unit 151, the external force calculator 152, the deterioration history data calculator 153, the wear state predictor 154, the durability predictor 155, and the model construction unit 156, the present invention is not limited to such. A plurality of controllers 15 and servers 10 specialized for the respective operations may be provided.

For example, an embodiment is also possible in which a general-purpose computer functions as the server 10 according to the above embodiment. Specifically, a program describing the processes for achieving the functions of the server 10 according to the above embodiment is stored in a memory in the general-purpose computer, and read and executed by a processor in the general-purpose computer. Thus, the present invention can also be implemented as a program executable by a processor, or a non-transitory computer-readable medium storing the program. Examples of the non-transitory computer-readable medium include magnetic recording devices, optical discs, magnetooptical recording media, and semiconductor memories.

### INDUSTRIAL APPLICABILITY

It is thus possible to provide a tire remaining durability prediction apparatus, tire remaining durability prediction method, and program that can improve the prediction accuracy of the remaining durability of tires.

### [Contribution to the United Nations-led Sustainable Development Goals (SDGs)]

The SDGs have been proposed to create a sustainable society. An embodiment of the present invention is considered to be a technology that can contribute to "No. 12 Responsible Consumption and Production", "No. 13 Climate Action", etc.

### REFERENCE SIGNS LIST

- 1: tire remaining durability prediction system
- 2: vehicle
- 3: tire
- 3A: base tire
- 3A-1: inter-belt part
- 3A-2: belt-ply part
- 3A-3: ply end
- 3B: tread rubber
- 10: server (tire remaining durability prediction apparatus)
- 11: communication unit
- 12: output unit
- 13: input unit
- 14: storage unit
- 15: controller
- 151: data acquisition unit
- 152: external force calculator
- 153: deterioration history data calculator
- 154: wear state predictor
- 155: durability predictor
- 156: model construction unit
- 20: measurement apparatus
- 30: terminal apparatus
- 40: network
- Fx, Fy, Fz: external force component
- CL: tire equatorial plane

## Claims

1. A tire remaining durability prediction apparatus (10) comprising:
a data acquisition unit (151) configured to acquire running data of a vehicle (2) on which a tire (3) is mounted or external force data of an external force acting on the tire (3);
a deterioration history data calculator (153), including a computational model constructed by machine learning, configured to calculate deterioration history data including at least temperature history data for at least one part of a base tire portion (3A) of the tire (3), based on the running data or the external force data; and
a durability predictor (155) configured to output remaining durability of the tire (3) based on the deterioration history data for the at least one part of the base tire portion (3A), wherein
the computational model is configured to acquire the external force data and output the deterioration history data; and
the computational model is a recursive computational model that uses past output as input.

2. The tire remaining durability prediction apparatus (10) according to claim 1, further comprising
an external force calculator (152) configured to calculate the external force data based on the running data,
wherein the external force calculator (152) is configured to calculate the external force data based on the running data and information about the tire (3).

3. The tire remaining durability prediction apparatus (10) according to claim 1, wherein the durability predictor (155) is configured to output the remaining durability of the tire (3) based on the remaining durability of the tire (3) at a specific time point and the deterioration history data from the specific time point.

4. The tire remaining durability prediction apparatus (10) according to claim 1, wherein the data acquisition unit (151) is configured to further acquire outdoor temperature data, and
the deterioration history data calculator (153) is configured to calculate the temperature history data based on the external force data and the outdoor temperature data.

5. The tire remaining durability prediction apparatus (10) according to claim 1, wherein
the data acquisition unit (151) is configured to further acquire outdoor temperature data, and
the deterioration history data calculator (153) is configured to calculate the temperature history data based on the external force data and the outdoor temperature data, if the running data does not satisfy a predetermined condition, and
the deterioration history data calculator (153) is configured to calculate the temperature history data based on the outdoor temperature data without using the external force data, if the running data satisfies the predetermined condition.

6. The tire remaining durability prediction apparatus (10) according to claim 1, wherein the deterioration history data includes at least the strain history data, and
the computational model configured to calculate the strain history data is configured to acquire the external force data and output data about principal strain of the tire (3) as the strain history data.

7. The tire remaining durability prediction apparatus (10) according to claim 1, wherein the data acquisition unit (151) is configured to further acquire a wear state of the tire (3), and
the deterioration history data calculator (153) is configured to calculate the deterioration history data based on the external force data and the wear state of the tire (3).

8. The tire remaining durability prediction apparatus (10) according to claim 1, further comprising
a wear state predictor (154) configured to calculate a wear state of the tire (3) based on the external force data,
wherein the deterioration history data calculator (153) is configured to calculate the deterioration history data based on the external force data and the wear state of the tire (3).

9. A tire remaining durability prediction method executed by one or more computers (10), the tire remaining durability prediction method comprising:
acquiring (S101) running data of a vehicle (2) on which a tire (3) is mounted or external force data of an external force acting on the tire (3);
calculating (S103), using a computational model constructed by machine learning, deterioration history data including at least temperature history data for at least one part of a base tire portion (3A) of the tire, based on the running data or the external force data; and
outputting (S105) remaining durability of the tire (3) based on the deterioration history data for the at least one part of the base tire portion (3A), wherein
the calculating (S103) the deterioration history data further includes acquiring the external force data and outputting the deterioration history data; and
the computational model is a recursive computational model that uses past output as input.

10. A program for causing one or more computers (10) to execute operations, the operations comprising:
acquiring (S101) running data of a vehicle (2) on which a tire (3) is mounted or external force data of an external force acting on the tire (3);
calculating (S103), using a computational model constructed by machine learning, deterioration history data including at least temperature history data for at least one part of a base tire portion (3A) of the tire (3), based on the running data or the external force data; and
outputting (S105) remaining durability of the tire (3) based on the deterioration history data for the at least one part of the base tire portion (3A), wherein
the calculating (S103) the deterioration history data further includes acquiring the external force data and outputting the deterioration history data; and
the computational model is a recursive computational model that uses past output as input.

## Patentansprüche

1. Einrichtung (10) zur Vorhersage verbleibender Haltbarkeit eines Reifens, die Folgendes umfasst:
eine Datenerhebungseinheit (151), die dazu konfiguriert ist, Fahrdaten eines Fahrzeugs (2) zu erheben, an dem ein Reifen (3) montiert ist, oder Daten über eine auf den Reifen (3) wirkende externe Kraft;
einen Rechner (153) für Verschleißverlaufsdaten, einschließlich eines durch maschinelles Lernen erstellten Rechenmodells, das dazu konfiguriert ist, Verschleißverlaufsdaten, einschließlich mindestens Temperaturverlaufsdaten, für mindestens einen Teil eines Basisreifenabschnitts (3A) des Reifens (3) basierend auf den Fahrdaten oder den Daten der externen Kraft zu berechnen; und
einen Haltbarkeitprädiktor (155), der dazu konfiguriert ist, die verbleibende Haltbarkeit des Reifens (3) basierend auf den Verschleißverlaufsdaten für mindestens einen Teil des Basisreifenabschnitts (3A) auszugeben, wobei
das Rechenmodell dazu konfiguriert ist, die Daten der externen Kräfte zu erheben und die Verschleißverlaufsdaten auszugeben; und
das Rechenmodell ein rekursives Rechenmodell ist, das vergangene Ausgabe als Eingabe verwendet.

2. Einrichtung (10) zur Vorhersage der verbleibenden Haltbarkeit eines Reifens nach Anspruch 1, die weiter Folgendes umfasst:
einen Rechner (152) für externe Kraft, der dazu konfiguriert ist, die Daten der externen Kraft basierend auf den Fahrdaten zu berechnen,
wobei der Rechner (152) für externe Kraft dazu konfiguriert ist, die Daten der externen Kraft basierend auf den Fahrdaten und Informationen über den Reifen (3) zu berechnen.

3. Einrichtung (10) zur Vorhersage der verbleibenden Haltbarkeit eines Reifens nach Anspruch 1, wobei der Haltbarkeitsprädiktor (155) dazu konfiguriert ist, die verbleibende Haltbarkeit des Reifens (3) basierend auf der verbleibenden Haltbarkeit des Reifens (3) zu einem bestimmten Zeitpunkt und den Verschleißverlaufsdaten ab diesem Zeitpunkt auszugeben.

4. Einrichtung (10) zur Vorhersage der verbleibenden Haltbarkeit eines Reifens nach Anspruch 1, wobei die Datenerhebungseinheit (151) dazu konfiguriert ist, zusätzlich Außentemperaturdaten zu erheben, und
der Rechner (153) für Verschleißverlaufsdaten dazu konfiguriert ist, die Temperaturverlaufsdaten basierend auf den Daten der externen Kraft und den Außentemperaturdaten zu berechnen.

5. Einrichtung (10) zur Vorhersage der verbleibenden Haltbarkeit eines Reifens nach Anspruch 1, wobei
die Datenerhebungseinheit (151) dazu konfiguriert ist, zusätzlich Außentemperaturdaten zu erheben, und
der Rechner (153) für Verschleißverlaufsdaten und dazu konfiguriert ist, die Temperaturverlaufsdaten basierend auf den Daten der externen Kraft und der Außentemperaturdaten zu berechnen, wenn die Fahrdaten eine vorbestimmte Bedingung nicht erfüllen, und
der Rechner (153) für Verschleißverlaufsdaten dazu konfiguriert ist, die Temperaturverlaufsdaten basierend auf den Außentemperaturdaten zu berechnen, ohne die Daten der externen Kraft zu verwenden, wenn die Fahrdaten die vorbestimmte Bedingung erfüllen.

6. Einrichtung (10) zur Vorhersage der verbleibenden Haltbarkeit eines Reifens nach Anspruch 1, wobei die Verschleißverlaufsdaten mindestens die Dehnungsverlaufsdaten beinhalten, und
das zum Berechnen der Dehnungsverlaufsdaten konfigurierte Rechenmodell dazu konfiguriert ist, die Daten der externen Kraft zu erheben und Daten über die Hauptdehnung des Reifens (3) als die Dehnungsverlaufsdaten auszugeben.

7. Einrichtung (10) zur Vorhersage der verbleibenden Haltbarkeit eines Reifens nach Anspruch 1, wobei die Datenerhebungseinheit (151) dazu konfiguriert ist, weiter einen Verschleißzustand des Reifens (3) zu erheben, und
der Rechner (153) für Verschleißverlaufsdaten dazu konfiguriert ist, die Verschleißverlaufsdaten basierend auf den Daten der externen Kraft und dem Verschleißzustand des Reifens (3) zu berechnen.

8. Einrichtung (10) zur Vorhersage der verbleibenden Haltbarkeit eines Reifens nach Anspruch 1, die weiter Folgendes umfasst:
einen Verschleißzustandsprädiktor (154), der dazu konfiguriert ist, einen Verschleißzustand des Reifens (3) basierend auf den Daten der externen Kraft zu berechnen,
wobei der Rechner (153) für Verschleißverlaufsdaten dazu konfiguriert ist, die Verschleißverlaufsdaten basierend auf den Daten der externen Kraft und des Verschleißzustands des Reifens (3) zu berechnen.

9. Verfahren zur Vorhersage einer verbleibenden Haltbarkeit eines Reifens, das von einem oder mehreren Computern (10) ausgeführt wird, wobei das Verfahren zur Vorhersage einer verbleibenden Haltbarkeit eines Reifens Folgendes umfasst:
Erheben (S101) von Fahrdaten eines Fahrzeugs (2), an dem ein Reifen (3) montiert ist, oder von Daten über eine auf den Reifen (3) wirkende externe Kraft;
Berechnen (S103), unter Verwendung eines durch maschinelles Lernen erstellten Rechenmodells, der Verschleißverlaufsdaten, die mindestens Temperaturverlaufsdaten für mindestens einen Teil des Basisreifenabschnitts (3A) des Reifens basierend auf den Fahrdaten oder den Daten der externen Kraft beinhalten; und
Ausgeben (S105) der verbleibenden Haltbarkeit des Reifens (3) basierend auf den Verschleißerlaufsdaten für mindestens einen Teil des Basisreifenabschnitts (3A), wobei
das Berechnen (S103) der Verschleißverlaufsdaten weiter das Erheben der Daten der externen Kraft und das Ausgeben der Verschleißverlaufsdaten beinhaltet; und
das Rechenmodell ein rekursives Rechenmodell ist, das vergangene Ausgabe als Eingabe verwendet.

10. Programm zum Veranlassen eines oder mehrerer Computer (10), Operationen auszuführen, wobei die Operationen Folgendes umfassen:
Erheben (S101) von Fahrdaten eines Fahrzeugs (2), an dem ein Reifen (3) montiert ist, oder von Daten über eine auf den Reifen (3) wirkende externe Kraft;
Berechnen (S103), unter Verwendung eines durch maschinelles Lernen erstellten Rechenmodells, der Verschleißverlaufsdaten, die mindestens Temperaturverlaufsdaten für mindestens einen Teil des Basisreifenabschnitts (3A) des Reifens (3) basierend auf den Fahrdaten oder den Daten der externen Kraft beinhalten; und
Ausgeben (S105) der verbleibenden Haltbarkeit des Reifens (3) basierend auf den Verschleißerlaufsdaten für mindestens einen Teil des Basisreifenabschnitts (3A), wobei
das Berechnen (S103) der Verschleißverlaufsdaten weiter das Erheben der Daten der externen Kraft und das Ausgeben der Verschleißverlaufsdaten beinhaltet; und
das Rechenmodell ein rekursives Rechenmodell ist, das vergangene Ausgabe als Eingabe verwendet.

## Revendications

1. Appareil de prédiction de la durabilité restante d'un pneu (10) comprenant :
une unité d'acquisition de données (151) configurée pour acquérir des données de fonctionnement d'un véhicule (2) sur lequel un pneu (3) est monté ou des données de force externe d'une force externe agissant sur le pneu (3) ;
un calculateur de données d'historique de détérioration (153), incluant un modèle de calcul construit par apprentissage automatique, configuré pour calculer des données d'historique de détérioration incluant au moins des données d'historique de température pour au moins une partie d'une portion de pneu de base (3A) du pneu (3), sur la base des données de fonctionnement ou des données de force externe ; et
un prédicteur de durabilité (155) configuré pour fournir la durabilité restante du pneu (3) sur la base des données d'historique de détérioration de l'au moins une partie de la portion de base du pneu (3A), dans lequel
le modèle de calcul est configuré pour acquérir les données de force externe et produire les données d'historique de détérioration ; et
le modèle de calcul est un modèle de calcul récursif qui utilise les résultats antérieurs comme entrées.

2. Appareil de prédiction de la durabilité restante du pneu (10) selon la revendication 1, comprenant en outre
un calculateur de force externe (152) configuré pour calculer les données de force externe sur la base des données de fonctionnement,
dans lequel le calculateur de force externe (152) est configuré pour calculer les données de force externe sur la base des données de fonctionnement et des informations sur le pneu (3).

3. Appareil de prédiction de la durabilité restante du pneu (10) selon la revendication 1, dans lequel le prédicteur de durabilité (155) est configuré pour fournir la durabilité restante du pneu (3) sur la base de la durabilité restante du pneu (3) à un moment précis et des données d'historique de détérioration à partir de ce moment précis.

4. Appareil de prédiction de la durabilité restante des pneus (10) selon la revendication 1, dans lequel l'unité d'acquisition de données (151) est configurée pour acquérir en outre des données sur la température extérieure, et
le calculateur de données d'historique de détérioration (153) est configuré pour calculer les données d'historique de température en fonction des données de force externe et des données de température extérieure.

5. Appareil de prédiction de la durabilité restante du pneu (10) selon la revendication 1, dans lequel
l'unité d'acquisition de données (151) est configurée pour acquérir des données supplémentaires sur la température extérieure, et
le calculateur de données d'historique de détérioration (153) est configuré pour calculer les données d'historique de température sur la base des données de force externe et des données de température extérieure, si les données en cours ne satisfont pas à une condition prédéterminée, et
le calculateur de données d'historique de détérioration (153) est configuré pour calculer les données d'historique de température sur la base des données de température extérieure sans utiliser les données de force externe, si les données en cours satisfont à la condition prédéterminée.

6. Appareil de prédiction de la durabilité restante des pneus (10) selon la revendication 1, dans lequel les données d'historique de détérioration incluent au moins les données d'historique de déformation, et
le modèle de calcul configuré pour calculer les données d'historique de déformation est configuré pour acquérir les données de force externe et produire des données sur la déformation principale du pneu (3) en tant que données d'historique de déformation.

7. Appareil de prédiction de la durabilité restante du pneu (10) selon la revendication 1, dans lequel l'unité d'acquisition de données (151) est configurée pour acquérir en outre un état d'usure du pneu (3), et
le calculateur de données d'historique de détérioration (153) est configuré pour calculer les données d'historique de détérioration sur la base des données de force externe et de l'état d'usure du pneu (3).

8. Appareil de prédiction de la durabilité restante du pneu (10) selon la revendication 1, comprenant en outre
un prédicteur d'état d'usure (154) configuré pour calculer un état d'usure du pneu (3) sur la base des données de force externe,
dans lequel le calculateur de données d'historique de détérioration (153) est configuré pour calculer les données d'historique de détérioration sur la base des données de force externe et de l'état d'usure du pneu (3).

9. Procédé de prédiction de la durabilité restante du pneu exécuté par un ou plusieurs ordinateurs (10), le procédé de prédiction de la durabilité restante du pneu comprenant :
l'acquisition (S101) de données de fonctionnement d'un véhicule (2) sur lequel un pneu (3) est monté ou de données de force externe d'une force externe agissant sur le pneu (3) ;
le calcul (S103), à l'aide d'un modèle informatique construit par apprentissage automatique, de données d'historique de détérioration incluant au moins des données d'historique de température pour au moins une partie d'une portion de base du pneu (3A), sur la base des données de fonctionnement ou des données de force externe ; et
le calcul (S105) de la durabilité restante du pneu (3) à partir des données d'historique de détérioration de l'au moins une partie de la portion de base du pneu (3A), dans lequel
le calcul (S103) des données d'historique de détérioration inclut en outre l'acquisition des données de force externe et la production des données d'historique de détérioration ;
le modèle de calcul est un modèle de calcul récursif qui utilise les résultats antérieurs comme entrées.

10. Programme destiné à faire exécuter des opérations sur un ou plusieurs ordinateurs (10), ces opérations comprenant :
l'acquisition (S101) de données de fonctionnement d'un véhicule (2) sur lequel un pneu (3) est monté ou de données de force externe d'une force externe agissant sur le pneu (3) ;
le calcul (S103), à l'aide d'un modèle de calcul construit par apprentissage automatique, de données d'historique de détérioration incluant au moins des données d'historique de température pour au moins une partie d'une portion de base (3A) du pneu (3), sur la base des données de fonctionnement ou des données de force externe ; et
le calcul (S105) de la durabilité restante du pneu (3) sur la base des données d'historique de détérioration de l'au moins une partie de la portion de base du pneu (3A), dans lequel
le calcul (S103) des données d'historique de détérioration inclut en outre l'acquisition des données de force externe et la production des données d'historique de détérioration ;
le modèle de calcul est un modèle de calcul récursif qui utilise les résultats antérieurs comme entrées.
